# EUROPEAN PATENT APPLICATION

(11) **EP 0 715 097 A2**
(43) Date of publication of application: **05.06.1996**
(21) Application number: 95830424.8
(22) Date of filing: 11.10.1995
(51) Int. Cl.: F16H 57/04

(54) **Speed reduction gear**

(30) Priority: 28.11.1994 IT RE940099
(71) Applicant: Reggiana Riduttori S.r.l., I-42020 San Polo d'Enza (Reggio Emilia) (IT)
(72) Inventor: Albarelli, Franco, I-42020 San Polo d'Enza, Emilia (IT)
(74) Representative: Lanzoni, Luciano

(57) **Abstract**

The present invention relates to a speed reduction gear. A casing (2) of a speed reducer (1) is filled with water up to a pre-established level. On the casing (2) there is a water inlet (4) and water outlet (5), the inlet and the outlet are reciprocally connected by means of a water cooling circuit (6).

## Description

The present invention relates to a speed reduction gear which is used for reducing the speed of a driven shaft with respect to the speed of a driving shaft according to a gear reduction ratio.

In particular, reference is made to a speed reduction gear which is foreseen for being inserted between the driving shaft and the driven shaft, the said speed reduction gear comprising a casing provided with two rolling supports, to be respectively coupled with the driving shaft and the driven shaft, inside which casing is mounted at least one gear.

In prior art reduction gears the casing is usually filled up to a pre-established level, using a lubricant (mineral or synthetic oil).

Lubricants normally used other than being very expensive are also inflammable, and can cause fire risks, especially in environments that tend to be very rich in oxygen where the use of these lubricants is not advisable and in some cases prohibited.

Furthermore, lubricants normally used for speed reduction gears have toxic additives or can pollute the environment; so particular standards for lubricant storing and disposal have to be followed.

A further drawback of prior art reducers is represented by unavoidable leaks of polluting and non-biodegradable substances.

Furthermore, it is necessary to change the used oil frequently, thus causing high maintenance costs.

The aim of the present invention is to prevent the above mentioned limits and inconveniences of the prior art by supplying a reduction gear, simple to manufacture and cheap, which eliminates any kind of fire risks, and pollution.

An advantage of the present invention is to make available a reducer with low maintenance costs and easy to clean.

A further advantage of the present invention is that the reducer requires the use of a fluid whose lubrication properties are more or less constant when varying the temperature, at least up to a certain "range".

These aims and advantages along with others are all attained by the above mentioned reducer, as characterised in the claims, in which the casing is filled with water up to a pre-established level; water cooling means are envisaged; the gear wheels have an external antiscuff surface; each rolling support includes a ferrule provided with a plain bearing made of anti-frictional oxidation resistant material.

Further characteristics and advantages of the present invention will better emerge from the following description of two preferred but not exclusive embodiments of the present invention illustrated in the form of a non-limiting example in the following figures in which:

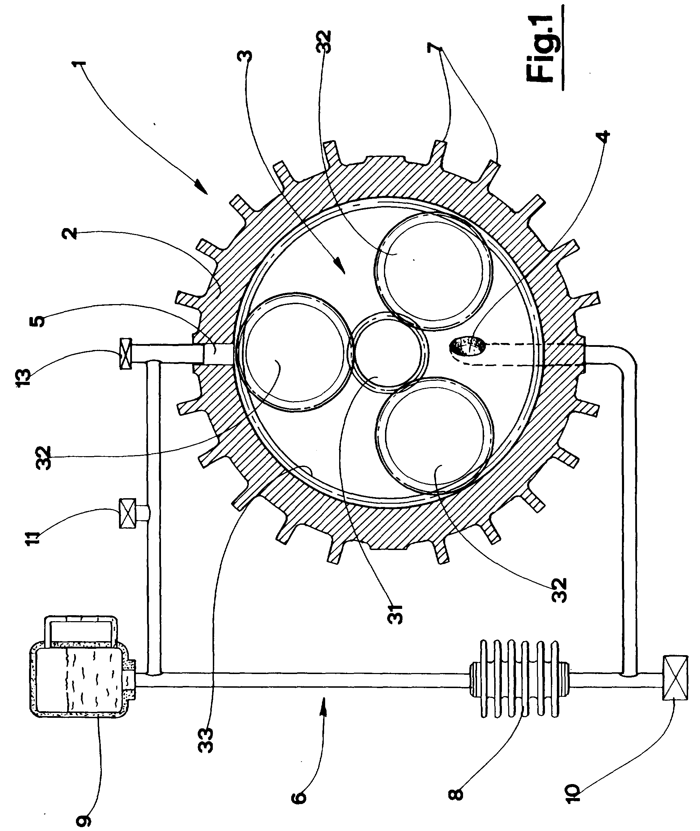

- figure 1 shows a schematic transversal section of a first embodiment of the present invention;

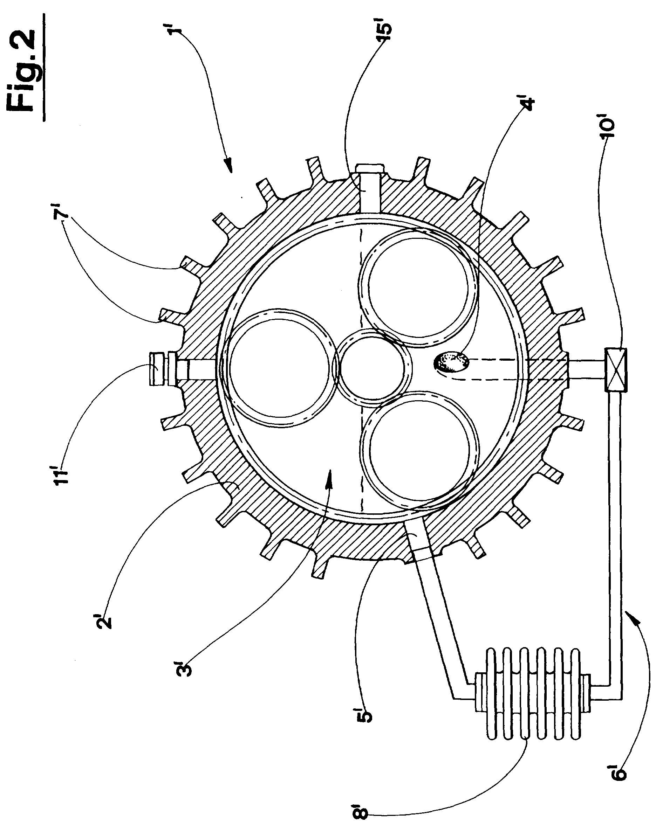

- figure 2 shows a schematic transversal section of a second embodiment of the present invention.

With reference to the first form of embodiment 1 denotes, in its entirety, a speed reduction gear, foreseen for being inserted between a driving shaft and a driven shaft.

The reducer 1 includes a casing 2 which is equipped with two rolling supports, not shown in the figure, which are respectively coupled with the driving shaft and the driven shaft.

According to the present invention, each of the rolling supports include a ferrule which is equipped with a plain bearing made of an anti-frictional oxidation resistant material, for example, stainless steel. The bearing is supported by a body of the ferrule made of plastic material and reinforced with fibreglass.

A possible variation of the supporting ferrule is made of ceramic material.

Inside the case 2, a series of gears is mounted, as a whole indicated with 3, for reducing the speed of the driven shaft with respect to that of the driving shaft, according to a gear reduction ratio. Here, said series of gears is constituted by a simple epicycloidal driving shaft, three satellites 32 engaged with an external rim 33 solidity fixed to the casing, and a satellite holder (of a known type although not shown in the accompanying figures) connected to the driving shaft.

According to the present invention, the casing 2 is completely filled with water. On the casing there are a water inlet 4 and a water outlet 5 connected to each other by means of a water cooling circuit (6), which is also filled with water.

The inlet 4 and the outlet 5 are located in areas of the casing 2, in which the water contained in the casing has respectively the minimum and maximum pressure levels during the operating of the reducer thanks to the movement of the gears 3; in this case, such areas are respectively constituted by the centre and the periphery of the internal epicycloidal spur wheels inside the casing. To be more precise, the inlet is positioned on a front part of the casing near the geometrical axis of the spur wheels, while the outlet is positioned on the side portion of the casing itself.

The casing 2 has external cooling ribs 7.

The cooling circuit 6 includes a heat exchanger 8 and an expansion tank 9.

In the cooling circuit 6 are envisaged a washout valve 10 and a voidbreaker valve 13 to let out the water contained in the casing and in the circuit. In addition, in the cooling circuit, there is a maximum pressure valve 11.

With reference to the second embodiment, 1' denotes, in its entirety, a speed reduction gear foreseen for being inserted between the driving shaft and the driven shaft.

The reducer 1' includes a casing 2' inside which is mounted a series of gears 3' made of epicycloidal spur wheels identical to the previous one.

According to the present invention, the casing 2' is filled with water up to a pre-established level (about half of the whole volume). On the casing 2' there is a water inlet 4' and a water outlet 5'. The water inlet and the water outlet are connected to each other by means of a water cooling circuit 6'.

The water inlets 4' and 5', as the water inlets 4 and 5, are located respectively near the centre and the periphery of the epicycloidal spur wheels which is inside the casing 2' that is in the areas in which the water has respectively the minimum and maximum pressure levels. To be more precise, the inlet 4' is positioned on a front part of the casing 2' while the outlet 5' is positioned on the side part of the same casing, slightly under the water level.

The casing 2' has external cooling ribs 7' and a level indicator 15'.

The cooling circuit 6' is fitted with a heat exchanger 8', a washout valve 10', and a minimum pressure valve 11'.

The casings 2 and 2' can be advantageously made of aluminium, thus obtaining an effective disposal of the heat generated during the operating of the reducer.

In both embodiments described above, the external surface of at least one part of the gear wheels constituting the gears 3 and 3' are made of antiscuff material. Hereuder are described three options concerning the material that can be used. In the first option, it is possible to provide satellites 32 made out of stainless steel with a superficial phosphate coating or alternatively a nickeling coating, while the outer rim 33 and the solar 31 are made of martensitic nitrided stainless steel.

In the second option, it is possible to provide the satellites 32 made of martensitic nitrided stainless steel.

In the third option, all the gear wheels are made out of martensitic nitrided stainless steel.

During the operating of the reducer, the movement of the gears advantageously contributes to generating a water flow inside the cooling circuit from the outlet to the inlet.

The use of the water eliminates any fire risks or pollution.

With respect to prior art reducers, this reducer has lower maintenance costs thanks to the fact that water is widely available, cheap, and easy to dispose.

The reducer results extremely easy and convenient to clean.

A further advantage of the present invention is represented by the fact that during the operating of the reducer the lubrication properties of the water are almost constant when the temperature present inside the casing changes. It is also to be noted that the cooling circuit is provided with dimensions so as to keep the water in the casing at a temperature below 90 °C below the boiling temperature.

The reducer above described uses water advantageously which water, having a relatively high specific heat, is capable of eliminating a considerable quantity of heat.

## Claims

1. A speed reduction gear foreseen for being inserted between a driving shaft and a driven shaft including a casing (2), (2') which is equipped with two rolling supports to be coupled respectively with the driving shaft and the driven shaft, inside which casing is mounted at least one gear (3), (3') for reducing the speed of the driving shaft with respect to that of the driven shaft according to a gear reduction ratio, characterised in that:
- the casing (2), (2') is filled with water up to a pre-established level;
- in the casing (2), (2') are placed water cooling means;
- the outer surface of at least one of the gear wheels making up the gear (3) (3') is made of an antiscuff material;
- each one of the said rolling supports include a ferrule which is equipped with a plain bearing made out of an anti-frictional oxidation resistant material.

2. Reducer as in claim 1, characterised in that said cooling means include a water inlet (4), (4') and a water outlet (5), (5') connected to each other by a cooling circuit (6), (6').

3. Reducer as in claim 2, characterised in that the water inlet (4), (4') and the water outlet (5), (5') are positioned in areas of the casing (2), (2') in which the water contained in the casing has respectively the minimum and maximum pressure levels during the operating of the reducer and because of the gear movement (3), (3').

4. Reducer as in claim 3, characterised in that the gear includes a simple epicycloidal spur wheels having a centre solar (31) keyed to the driving shaft, at least one satellite (32) engaged with an external rim (33) solidly constrained to the casing and a satellite holder connected to the driving shaft; the water inlet (4), (4') and the water outlet (5), (5') are respectively located close to the centre and the periphery of the epicycloidal spur wheels.

5. Reducer as in claim 2, characterised in that the water cooling circuit (6), (6') includes a heat exchanger (8), (8').

6. Reducer as in claim 5, characterised in that the casing (2) and the cooling circuit (6) are completely filled with water, the water cooling circuit (6) including an expansion tank (9).

7. Reducer as in claim 6, characterised in that in the water cooling circuit (6) there is a washout valve (10) and a voidbreaker valve (13) for letting out the water contained in the casing (2) and in the circuit (6).

8. Reducer as in claim 5, characterised in that the casing (2') is filled with water up to about half of the total volume of the casing itself; in the water cooling circuit (6') there is a maximum pressure valve (11') and a washout valve (10').

9. Reducer as in claim 1, characterised in that at least one of the said gear wheels is made of steel and undergoes a preliminary superficial phosphate coat treatment.

10. Reducer as in claim 1, characterised in that at least one of the said gear wheels is made of stainless steel and undergoes a preliminary superficial nickeling treatment.

11. Reducer as in claim 1, characterised in that at least one of the said gear wheels is made of martensitic nitrided stainless steel.

12. Reducer as in claim 1, characterised in that the said cooling means include a plurality of cooling ribs (7), (7') positioned on the external surface of the casing (2), (2').

13. Reducer as in claim 1, characterised in that the said plain bearing is made of stainless steel on the support made of plastic material reinforced with fibreglass.

14. Reducer as in claim 1, characterised in that the said plain bearing is made on the support made of ceramic material.
